# EUROPÄISCHE PATENTSCHRIFT

(11) **EP 0 528 381 B1**
(45) Veröffentlichungstag und Bekanntmachung des Hinweises auf die Patenterteilung: **01.03.1995**
(21) Anmeldenummer: 92113921.8
(22) Anmeldetag: 14.08.1992
(51) Int. Cl.: B62M 11/12, F16H 37/08

(54) **Antriebsnabe für ein Fahrzeug, insbesondere Fahrrad, mit stufenlos einstellbarem Übersetzungsverhältnis**
Hub, particularly for bicycles, with continuously-variable transmission
Moyen d'entraînement pour un véhicule, en particulier pour bicyclette avec un rapport de transmission continuellement variable

(30) Priorität: 16.08.1991 DE 4126993
(43) Veröffentlichungstag der Anmeldung: 24.02.1993
(73) Patentinhaber: Fichtel & Sachs AG, D-97419 Schweinfurt (DE)
(72) Erfinder: Lutz, Manfred, Dipl.-Ing. FH, W-8720 Schweinfurt (DE)
(74) Vertreter: Prechtel, Jörg, Dipl.-Phys. Dr.

(56) Entgegenhaltungen:
- EP-A- 0 432 742
- DE-A- 2 310 880
- GB-A- 2 080 452
- US-A- 2 469 653

## Beschreibung

Die Erfindung betrifft eine Antriebsnabe für ein Fahrzeug, insbesondere Fahrrad, mit einem Reibradgetriebe, dessen Übersetzungsverhältnis stufenlos einstellbar ist.

Aus dem Handbuch "Bicycling Science", Frank Rowland Witt, David Gordon Wilson, The MIT-Press, Cambridge, London, 1988, 2. Ausgabe, Seite 282 sind mehrere Bauprinzipien von Reibradgetrieben bekannt, wobei auf die Problematik derartiger Reibradgetriebe in Verbindung mit Fahrradnaben hingewiesen wird. Diese liegt darin, daß bei Fahrradnaben relativ hohe Drehmomente bei geringen Drehzahlen zu übertragen sind, wobei das Übersetzungsverhältnis derart einstellbar sein soll, daß sich je nach Bedarf die Nabenhülse schneller oder langsamer als der Antreiber dreht. Eine der prinzipiellen dargestellten Bauformen ist ein Reibradgetriebe in Form eines Kugelreibradgetriebes, wobei ortsfest mit winkelverstellbaren Kugelachsen gelagerte Reibkugeln am konusartig ausgebildeten Außenumfang sowohl eines Antriebsrads als auch eines Abtriebsrads abrollen zur Übertragung eines entsprechenden Drehmoments von der Antriebsscheibe auf die Abtriebsscheibe.

Die DE-21 36 243 A1 zeigt ein Standgetriebe mit Eingangswelle und einer zu dieser koaxialen Ausgangswelle. Die hier verwendeten Reibkugeln sind frei drehbar gelagert und rollen an insgesamt vier relativ zueinander verstellbaren Anlageflächen ab, wobei sich dementsprechend die Drehachse der Kugeln einstellt. Der Antrieb der Reibkugeln erfolgt über eine geneigte Außenumfangsfläche einer mit der Antriebsachse verbundenen Antriebsscheibe. Eine Spreizkupplung zur Erhöhung der Anpreßkraft mit wachsendem Drehmoment ist vorgesehen. Der Aufbau dieser Getriebe ist aufwendig. Eine direkte, präzise Einstellung eines gewünschten Übersetzungsverhältnisses ist nicht möglich. Das feststehende Gehäuse, in welchem unter anderem eine Antriebsschnecke der Steuereinrichtung vorgesehen ist, kann nicht durch eine drehende Nabenhülse ersetzt werden.

Die US-PS 4 735 430 zeigt eine Antriebsnabe für Fahrräder mit einem Reibradgetriebe, welches auf dem Prinzip der Drehmomentsübertragung mittels Reibrädern beruht, die an Toroidflächen einander gegenüberliegender Toroidscheiben abrollen. Die Nabenachse ist hier, anders wie bei herkömmlichen Antriebsnaben, drehbar im Fahrradrahmen gelagert, so daß spezielle Montagemittel erforderlich sind. Die beiden Toroidscheiben drehen sich in entgegengesetzten Richtungen. Um dennoch die Nabenhülse in der Drehrichtung des Antreibers anzutreiben, ist bei dieser Bauart daher ein drehrichtungsumkehrendes Planetenradgetriebe mit ortsfestem Planetenradträger notwendig. Die Planetenräder greifen in eine mit dem Reibradgetriebe verbundene Hohlradverzahnung sowie in eine mit der Nabenhülse verbundene Sonnenradverzahnung ein, so daß das Reibradgetriebe somit langsamer läuft als die Nabenhülse. Bei vorgegebener Antriebsleistung muß das Reibradgetriebe daher zur Übertragung relativ großer Drehmomente ausgebildet sein. Insbesondere werden hohe Anpreßkräfte im Reibradgetriebe erforderlich, damit kein unerwünschter Schlupf entsteht. Das Reibradgetriebe ist bei sämtlichen möglichen Übersetzungsverhältnissen stets in Bewegung, was Reibungsverluste mit sich bringt.

Eine Verbesserung dieser Habe zeigt die EP 0 432 742 A1. Die Nabenachse ist, wie bei Fahrrädern üblich, starr in den Fahrradrahmen einbaubar. Auch diese Fahrradnabe arbeitet nach dem Prinzip der Toroidscheiben. Zur Angleichung des Drehzahlbereichs dieser Habe an die bei Fahrrädern üblichen Übersetzungsverhältnisse ist ein Planetenradgetriebe vorgesehen, wobei der Planetenradträger mit der Nabenhülse verbunden ist und die Planetenräder einerseits in ein ortsfestes Hohlrad und andererseits in ein mit dem Reibradgetriebe verbundenes Sonnenrad eingreifen.

Das Hohlrad ist über eine das Reibradgetriebe umgreifende, sich über ein Großteil der axialen Länge der Nabenhülse erstreckende innere Hülse mit der Nabenachse verbunden, was den Bauaufwand sowie den erforderlichen Einbauraum erhöht. Das Planetenradgetriebe ist unabhängig vom jeweils eingestellten Übersetzungsverhältnis in Bewegung. Schließlich ist der Bauaufwand für Fahrradnaben, die nach dem Prinzip der Toroidscheiben arbeiten, besonders hoch, insbesondere deshalb, weil die Herstellung des Getriebes eine hohe Fertigungsgenauigkeit erfordert. Auch ist der Übersetzungsbereich bei dieser Bauart relativ eng begrenzt.

Der Erfindung liegt die Aufgabe zugrunde, eine Antriebsnabe für ein Fahrzeug, insbesondere Fahrrad, anzugeben, deren Übersetzungsverhältnis stufenlos einstellbar ist. Die Antriebsnabe soll von einfacher und kostengünstig herzustellender Konstruktion sein. Ferner soll der Wirkungsgrad hoch sein. Die Möglichkeit für einen großen Übersetzungsbereich soll gegeben sein.

Die Erfindung geht von einer Antriebsnabe für ein Fahrzeug, insbesondere Fahrrad, aus, umfassend
- eine Nabenachse, die eine Achse der Nabe festlegt,
- eine die Nabenachse gleichachsig und relativ dazu drehbar umschließende Nabenhülse,
- einen relativ zur Nabenhülse und zur Nabenachse drehbar gelagerten Antreiber,
- ein innerhalb der Nabenhülse angeordnetes Reibradgetriebe im Kraftweg zwischen Antreiber und Nabenhülse
- wenigstens eine bei vom Antreiber her erfolgendem Antrieb der Nabe den Kraftweg zwischen Antreiber und Nabenhülse schließende, bei nicht antreibendem Antreiber den Kraftweg öffnende Kupplungseinrichtung,
- ein Planetenradgetriebe im Kraftweg zwischen Antreiber und Nabenhülse,
- eine von außen betätigbare Steuereinrichtung zur stufenlosen Einstellung des Übersetzungsverhältnisses des Reibradgetriebes.

Die erfindungsgemäße Verbesserung besteht darin, daß das Reibradgetriebe als Kugelreibradgetriebe ausgebildet ist, umfassend
- zwei sich axial gegenüberliegende Ringe, einen Antriebsring und einen Abtriebsring,
- mehrere in Umfangsrichtung der Ringe verteilte, die Ringe reibschlüssig miteinander verbindende Reibkugeln, die mittels Kugelachsen drehbar gelagert sind, und
- einen mit der Nabenachse drehfest verbundenen Reibkugelträger, an dem die Reibkugeln mit ihren Kugelachsen jeweils in einer die Achse der Nabe enthaltenden Ebene schwenkbar gelagert sind,
daß ein Planetenradträger des Planetenradgetriebes mit dem Antreiber verkoppelt ist, daß die Planetenräder einerseits mit einem mit dem Abtriebsring verkoppelten Sonnenrad und andererseits mit einem mit der Nabenhülse verkoppelten Hohlrad kämmen, und daß die Steuereinrichtung zum gemeinsamen Verschwenken der Kugelachsen ausgebildet ist.

Das Planetenradgetriebe sorgt dafür, daß sich das Reibradgetriebe schneller dreht als die Nabenhülse. Vom Reibradgetreibe müssen daher dementsprechend geringere Drehmomente übertragen werden, was die erforderlichen Anpreßkräfte reduziert. Die auftretenden Axialkräfte und Reibungskräfte sind dementsprechend geringer mit Reduzierung der Reibungsverluste. Der Antriebsring bzw. der Abtriebsring kann in den beiden Extremlagen der Kugelachse die Reibungskugel in einem Berührungsring mit ziemlich kleinem Durchmesser nahe der Kugelachse berühren, so daß sich ein sehr hohes bzw. sehr niedriges Übersetzungsverhältnis ergibt. Der Übersetzungsbereich kann zwischen 1 : 7 und 1 : 9 liegen. Dieser wird dann für den Einsatz im Fahrrad durch das nachgeschaltete Planetengetriebe, beispielsweise 1 : 2,5, untersetzt. Die auftretenden Reib- und Axialkräfte werden daher durch die erfindungsgemäße Bauweise auf etwa 1/3 reduziert. Durch entsprechende Anpassung des Planetenradgetriebes kann natürlich auch ein höherer Übersetzungsbereich der Nabe realisiert werden. Ein wesentlicher Vorteil der erfindungsgemäßen Ausbildung liegt darin, daß der Planetenradträger mit dem Antreiber verkoppelt ist und weder Sonnenrad noch Hohlrad ortsfest ist. Dann, wenn Antreiber und Nabenhülse gleiche Drehzahl haben, dreht sich dementsprechend sowohl das Sonnenrad als auch das Hohlrad als auch der Planetenradträger mit der gleichen Drehgeschwindigkeit, so daß sich das Planetenradgetriebe als Ganzes dreht, und die Planetenräder innerhalb des drehenden Planetenradgetriebes still stehen. Bei dem bei entsprechender Auslegung der Fahrradnabe am häufigsten verwendeten mittleren Übersetzungsverhältnis von 1 : 1 treten daher überhaupt keine Reibungsverluste im Planetenradgetriebe auf. Bei größerem oder kleinerem Übersetzungsverhältnis wird das Planetenradgetriebe nur entsprechend der Differenz der Drehzahlen zwischen Antreiber und Nabenhülse in Anspruch genommen. Ein großer Teil der Antriebsleistung wird auf kurzem Wege vom Antreiber über das Planetenradgetriebe an die Nabenhülse weitergeleitet, während nur ein kleiner Teil der Leistung in Abhängigkeit vom eingestellten Übersetzungsverhältnis das Kugelreibradgetriebe durchläuft. Der Gesamtwirkungsgrad der Antriebsnabe ist daher hoch. Die für den schlupffreien Betrieb des Kugelreibradgetriebes erforderlichen Anpreßkräfte können relativ gering gehalten werden.

Zur drehbaren Lagerung der Planetenräder kann der Antreiber mit entsprechenden Bolzen versehen sein.

Bevorzugt ist die Kupplungseinrichtung als Klinkenfreilaufkupplung ausgebildet, die zwischen dem Hohlrad und der Nabenhülse angeordnet ist. Bei stehendem Antreiber dreht sich folglich lediglich die Nabenhülse. Es ist nur geringer Einbauraum für die Klinkenfreilaufkupplung erforderlich, wenn, wie vorgeschlagen, die Klinkenverzahnung der Klinkenfreilaufkupplung am Innenumfang der Nabenhülse vorgesehen ist.

In einer besonders bevorzugten Ausgestaltung der Erfindung ist vorgesehen, daß zur axialen Verspannung des Kugelreibradgetriebes mit Erhöhung der Andruckkraft zwischen den Reibkugeln und dem Abtriebs- und Antriebsring mit zunehmendem Antriebsdrehmoment eine Gewindeverbindung im Kraftweg zwischen Antreiber und Kugelreibradgetriebe angeordnet ist. Dieses Gewinde sorgt für eine proportional mit dem Antriebsdrehmoment steigende Andruckkraft, so daß leichter, verlustarmer Antriebsnabenlauf bei geringen Andruckkräften gewährleistet ist sowie schlupffreier Betrieb bei höheren Andruckkräften. Von besonderem Vorteil ist, daß die Getriebeverbindung praktisch keinen zusätzlichen Einbauraum erfordert.

In einer mechanisch robusten und dabei konstruktiv einfach aufgebauten Ausführungsform der Erfindung ist vorgesehen, daß der Antriebsring mit dem Antreiber über eine Antriebshülse zur Drehmomentübertragung verbunden ist, wobei die Antriebshülse mit einem der beiden Teile Antreiber und Antriebsring drehfest verbunden und mit dem anderen der beiden Teile über ein rechtsgängiges Gewinde verkoppelt ist. Das rechtsgängige Gewinde sorgt bei der üblichen Antriebsdrehrichtung bei einer Fahrradantriebsnabe für die erforderliche Verspannung.

Bevorzugt ist vorgesehen, daß das Gewinde ein Flachgewinde mit im wesentlichen rechteckigem Zahnprofil ist. Ein derartiges Gewinde weist bei einfacher Herstellbarkeit geringe Belastung der Zahnflanken auf, so daß der Verschleiß auch bei hohen Drehmomenten vernachlässigbar ist.

Eine kompakte Bauform ist dadurch gewährleistet, daß die Antriebshülse mit der Nabenachse eine Lagerstelle bildet und diese auf ihrer gesamten Länge umschließt.

Hierzu trägt auch die Maßnahme bei, daß der Abtriebsring und das Sonnenrad einteilig miteinander verbunden sind und einen rohrförmigen Körper bilden, der auf der Antriebshülse drehbar gelagert ist.

Zur Lagerung der Reibkugeln wird vorgeschlagen, daß der Reibkugelträger eine erste Kugelträgerscheibe aufweist, die mit der Nabenachse drehfest verbunden ist und eine Mehrzahl radialer Nuten zur Aufnahme von über die Reibkugeln vorstehenden Enden der Kugelachsen aufweist. Hierbei ist besonders bevorzugt vorgesehen, daß der Reibkugelträger eine zweite Kugelträgerscheibe aufweist, die mit der ersten Kugelträgerscheibe axial drehfest verbunden ist und die mit einer Mehrzahl von Nuten versehen ist, die den Nuten der ersten Kugelträgerscheibe gegenüberliegen. Auf diese Weise erhält man eine verwindungssteife Baueinheit aus den beiden Reibkugelträgern. Die einander gegenüberliegenden Nuten gewährleisten eine präzise Führung der Enden der Kugelachsen, wobei die gemeinsame Verschwenkbarkeit der Kugelachsen gewährleistet ist.

Die Kugeln könnten auf den Kugelachsen drehbar gelagert sein. Im Hinblick auf einfache robuste Herstellbarkeit sind die Kugelachsen jedoch starr mit den Reibkugeln verbunden. Vor allem für diesen Fall wird vorgeschlagen, daß die Enden der Kugelachsen mit Kugellagern versehen sind, die in die jeweilige radiale Nut mit Bewegungsspiel eingreifen zur Bewegung des jeweiligen Endes in radialer Richtung. Die in den Nuten radial beweglichen Kugellager sorgen also für die Drehlagerung der Reibkugeln in sämtlichen möglichen Winkelstellungen der Kugelachsen bei hoher Präzision. Drehzahldifferenzen an den Reibungsstellen bei aufeinanderfolgenden Reibkugeln können vermieden werden, so daß der Verschleiß des Kugelreibradgetriebes gering gehalten werden kann.

Zur gemeinsamen Verschwenkung der Kugelachsen wird vorgeschlagen, daß mindestens eines der beiden Enden der Kugelachsen mit einem Verbindungsteil versehen ist, an welches die Steuereinrichtung zum Verschwenken der Kugelachsen angreift. Bevorzugt ist hierbei vorgesehen, daß die Steuereinrichtung ein Kulissenrad umfaßt mit Führungsrillen, in welche die als Kugelfortsätze ausgebildeten Verbindungsteile der Kugelachsen eingreifen. Um hierbei die relativ hohen Verstellkräfte ohne weiteres aufnehmen zu können, wird vorgeschlagen, daß die Führungsrillen spiralenförmig ausgebildet sind und die Kugelfortsätze mit geringem Bewegungsspiel führen, und daß das Kulissenrad an seiner den Führungsrillen gegenüberliegenden Seite mit einer Hohlradverzahnung ausgebildet ist, in die ein Steuerzahnrad eingreift. Durch entsprechende Wahl der Zahnzahl von Hohlradverzahnung und Steuerzahnrad kann die zum Verstellen des Übersetzungsverhältnisses erforderliche Verstellkraft dementsprechend reduziert werden. So kann die Steuereinrichtung vom Benutzer beispielsweise durch eine Doppelseilanordnung in beide Richtungen nahezu spiellos bewegt werden.

Um die erforderliche Andrückkraft zwischen den Reibkugeln und den Antriebs- und Abtriebsringen erzeugen zu können, müssen die entsprechenden radial nach außen gerichteten Reaktionskräfte von der Antriebsnabe aufgenommen werden. Die Reibkugeln könnten hierzu an ihrer von der Achse der Nabe abgewandten Seite an entsprechenden Walzen oder dergleichen abrollen, die ein ortsfestes Drehlager aufweisen. Besonders bevorzugt ist jedoch vorgesehen, daß sämtliche Reibkugeln am Innenumfang eines in der Nabenhülse frei drehbar gelagerten Führungsrings abrollen. Die Axialkräfte sämtlicher Kugeln kompensieren sich auf diese Weise, so daß es keiner besonders aufwendigen Drehlagerung des Führungsrings innerhalb der Nabenhülse bedarf.

Um auch beim Anfahren, d.h. bei geringem oder fast verschwindendem Antriebsdrehmoment, eine ausreichende gegenseitige Andruckkraft von Reibkugeln und Antriebs- und Abtriebsring zu erhalten, wird ein Vorspannfederelement zur axialen Vorspannung von Antriebsring und Abtriebsring in Richtung aufeinander zu vorgeschlagen. Das Vorspannfederelement sorgt also für eine ständige reibschlüssige Verbindung der zusammenwirkenden Teile des Kugelreibradgetriebes. Diese Voranpressung sorgt für eine ständige Betriebsbereitschaft der Nabe vor dem Aufbau der axialen Verspannung des Kugelreibradgetriebes mit dem Antriebsdrehmoment, insbesondere aufgrund der Wirkung der vorstehend beschriebenen Gewindeverbindung. In jedem Falle ergibt sich für jede Reibungskugel ein in sich stabiles Kräftedreieck, welches von den Anlagepunkten der beiden Ringe (Antriebsring und Abtriebsring) sowie des Führungsrings gebildet wird.

Bevorzugt ist vorgesehen, daß das Vorspannfederelement als Druckfeder ausgebildet ist, welches sich einerseits an einer den Antriebsring mit dem Antreiber verbindenden Antriebshülse und andererseits an einem den Abtriebsring tragenden und die Antriebshülse umgreifenden, ringförmigen Körper abstützt. Zur weiteren Verbesserung der Anordnung wird vorgeschlagen, daß die Druckfeder sich andererseits an einem zwischen dem ringförmigen Körper und dem Antreiber angeordneten Axiallager abstützt. Die Druckfeder ist somit an einer Stelle angeordnet, wo sich ihre beiden Anlagestellen während des Betriebes nur unwesentlich gegeneinander verdrehen, nämlich an dem antriebsringseitigen Teil des Axiallagers sowie an der Antriebshülse. Beide Teile verdrehen sich aufgrund der Gewindeverbindung zwischen Antreiber und Antriebshülse lediglich geringfügig mit sich änderndem Antriebsdrehmoment.

Ferner wird vorgeschlagen, daß die vom Antreiber ausgehenden inneren axialen Kräfte von der Antriebshülse, dem Antriebsring, den Reibkugeln, einem die Reibkugeln umgreifenden Führungsring, dem Abtriebsring und einem zwischen Abtriebsring und Antreiber angeordneten Axiallager aufgenommen werden. Die während des Betriebs auftretenden und bei hohen Drehmomenten auch relativ hohen Axialkräfte werden in der angegebenen Weise ausgeglichen. Da sie weder über die Nabenhülse noch über die Nabenachse laufen, kann die Antriebsnabe dementsprechend leicht gebaut sein.

Im folgenden wird ein Ausführungsbeispiel der Erfindung anhand der Zeichnung erläutert.
- Fig. 1: zeigt einen Axial-Längsschnitt durch eine Antriebsnabe eines Fahrrads;
- Fig. 2: zeigt einen Schnitt der Antriebsnabe nach Linie II-II in Fig. 1;
- Fig. 3: zeigt einen Schnitt der Antriebsnabe nach Linie III-III in Fig. 1.

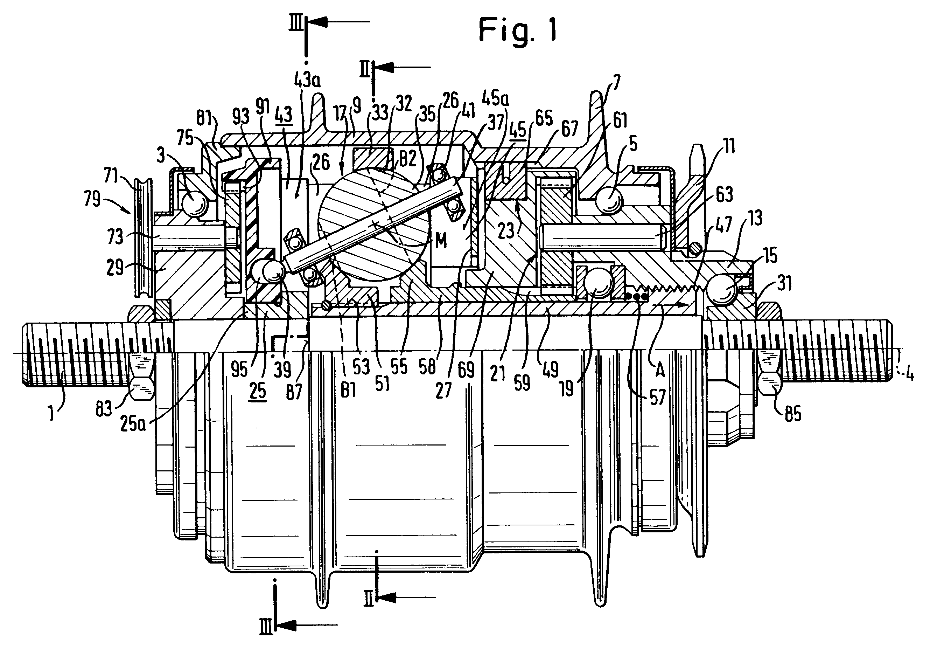

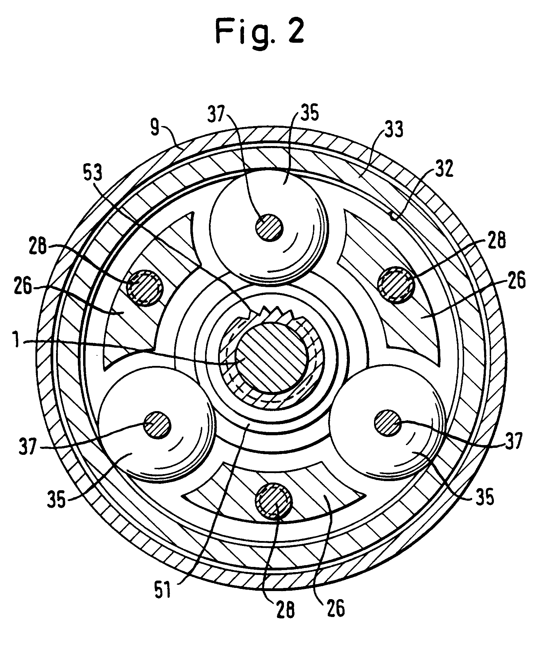

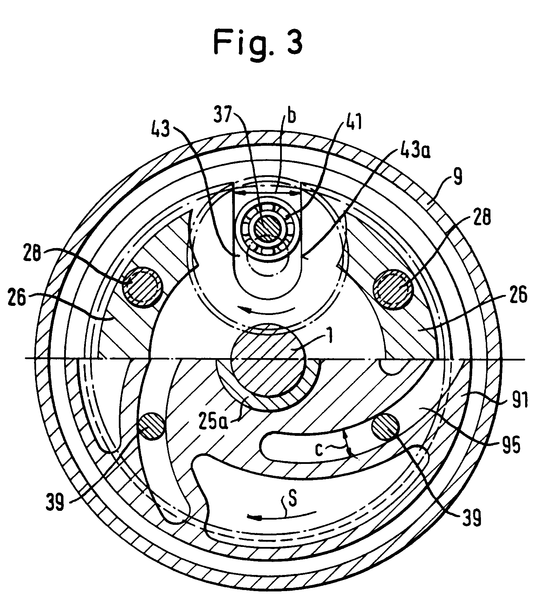

Während in Fig. 1 das Übersetzungsverhältnis der Antriebsnabe so eingestellt ist, daß man eine Berggang-Übersetzung erhält, ist in den Fig. 2 und 3 das Übersetzungsverhältnis auf eine mittlere Übersetzung eingestellt.

Die hier dargestellte Antriebsnabe umfaßt eine drehfest am Rahmen des Fahrrads zu befestigende Nabenachse 1, an der in nachstehend noch näher zu erläuternder Weise über Kugellager 3 und 5 eine mit Speichenflanschen 7 versehene Nabenhülse 9 drehbar gelagert ist. Die Mittellinie der Nabenachse bildet die Achse 4 der Antriebsnabe, um die sich die Nabenhülse 9 dreht. Axial seitlich der Nabenhülse 9 ist auf der Nabenachse 1 ein mit einem Kettenzahnrad 11 versehener Antreiber 13 mittels eines Kugellagers 15 drehbar gelagert. Die Nabenhülse 9 ist mit einem Hülsenring 81 fest verbunden, der aus Montagegründen erst nach dem Einlegen eines Kugelreibradgetriebes 17 (im folgenden Kugelreibgetriebe genannt) in der Nabenhülse 9 angebracht werden kann.

Die Nabenhülse 9 ist auf der rahmenfesten Nabenachse 1 auf folgende Weise drehbar gelagert: Auf der dem Kettenzahnrad 11 gegenüberliegenden Seite der Antriebsnabe wird eine steuerseitige Kugelträgerscheibe 25 zusammen mit einem Festkonus 29 von einer Mutter 83 gegen einen Ansatz 87 gepreßt und auf diese Weise drehfest mit der Nabenachse 1 verbunden. Die als Schrägkugellager ausgebildeten Kugellager 3 und 5 verbinden den Zusammenbau aus Nabenhülse 9 und Hülsenring 81 drehbar, wobei sich das Kugellager 5 am Antreiber 13 abstützt, der wiederum auf einem Stellkonus 31 gelagert ist. Dieser Stellkonus 31 ist auf das Gewinde der Nabenachse 1 aufgeschraubt und wird durch eine Mutter 85 gekontert. Unschwer erkennt man, daß die drehenden Teile Nabenhülse 9 und Antreiber 13 sowohl auf dem mit der Nabenachse 1 drehfest verbundenen Festkonus 29, wie auch auf dem Stellkonus 31 gelagert sind, und daß die spielfreie Einstellung der Schrägkugellager über den Stellkonus 31 erfolgt.

Das Kugelreibgetriebe 17 ist stufenlos einstellbar und umfaßt die steuerseitige Kugelträgerscheibe 25 und eine kettenzahnradseitige Kugelträgerscheibe 27, von denen die steuerseitige Kugelträgerscheibe 25 drehfest mit der Nabenachse 1 verbunden ist, wie bereits beschrieben. Die beiden Kugelträgerscheiben 25 und 27 sind über drei gemäß Fig. 3 bogenförmig gekrümmte Distanzstücke 26 miteinander verbunden und beispielsweise mittels die Distanzstücke 26 durchsetzender, zur Achse 4 paralleler Schraubbolzen 28 starr miteinander verschraubt zur Bildung einer drehfesten Baueinheit. Die Kugelträgerscheiben 25 und 27 haben radiale Nuten 43 und 45 mit einer Breite b, die dem Durchmesser von Kugellagern 41 entspricht, die von den Nutflanken 43a und 45a geführt werden. Die Nuten 43 und 45 liegen sich axial genau gegenüber, wodurch Kugelachsen 37 mit beidendig vorstehenden Achszapfen geführt werden können, auf denen Kugeln 35 drehfest angebracht sind. Ein solches Kugelreibgetriebe 17 trägt am Umfang mindestens drei (s. Fig. 2 und 3), möglichst aber vier oder fünf dieser Kugeln 35, von denen in Fig. 1 eine im Schnitt dargestellt ist. Die Kugeln 35 rollen am dementsprechend konkav gekrümmten Innenumfang 32 eines einzelnen Führungsrings 33 ab, der in der Nabenhülse 9 um die Achse 4 frei drehbar gelagert ist. Durch das axiale Anpressen eines Antriebsrings 51 an die Kugeln 35 zur Kettenzahnradseite hin und eines Abtriebsrings 55 an die Kugeln 35 zur Steuerseite hin, werden die Kugeln 35 radial nach außen gegen den Führungsring 33 gepreßt. Aufgrund dieses Kräftedreiecks befinden sich die Kugeln 35 im statischen Gleichgewichtszustand.

Am Zustandekommen der axialen Kräfte auf die Kugeln 35 ist der Antriebsring 51, eine Antriebshülse 49 und der Antreiber 13 beteiligt. Der Antriebsring 51, der mit den Kugeln 35 in Reibverbindung steht, ist mit der Antriebshülse 49 über eine Längsverzahnung 53 drehfest gekoppelt und axial festgelegt. Die Mitnahme der Antriebshülse 49 durch den Antreiber 13 erfolgt mittels eines Schraubgewindes 47, vorzugsweise Flachgewinde, welches über eine Steigung verfügt, die eine dem Antriebsmoment proportionale Verschiebekraft in Kettenzahnradrichtung (Pfeil A) erzeugt, die einen schlupffreien Reibschluß zu den Kugeln 35 garantiert. Im Falle der Drehmomenteinleitung wird die in Richtung Kettenzahnrad 11 wirkende Axialkraft also vom rechtsgängigen Gewinde 47 erzeugt und von der Antriebshülse 49 über die Längsverzahnung 53 an den Antriebsring 51 weitergegeben. An den Berührungsstellen mit den Kugeln 35 werden zusätzliche Radialkräfte erzeugt, die vom Führungsring 33 abgefangen und auf den Abtriebsring 55 weitergegeben werden, wo wiederum eine Axialkraftkomponente in Richtung Kettenzahnrad 11 entsteht, die über ein Axiallager 19 an den Antreiber 13 zurückgeleitet wird, wodurch sich der Ring der inneren Kräfte schließt. Eine Druckfeder 57 hat die Aufgabe, die Antriebshülse 49 gegen das Axiallager 19 derart vorzuspannen, daß der Antriebsring 51 in Richtung der Kugeln 35 (Pfeil A) gezogen wird, wodurch im Kugelreibgetriebe 17 Spiellosigkeit sowie eine geringe Verspannkraft entsteht, die für dessen sicheres Ansprechen unbedingt erforderlich ist.

Der Abtriebsring 55 ist an seiner Kettenzahnradseite über einen rohrförmigen Körper 58 einteilig mit einem Sonnenrad 59 verbunden. Das Sonnenrad 59 ist Teil eines Planetenradgetriebes 21, dessen Planetenräder 61 durch Bolzen 63 auf dem Antreiber 13 drehbar gelagert sind. Hierdurch dient der Antreiber 13 gleichzeitig als Planetenradträger in diesem Planetenradgetriebe 21. Zu dem Planetenradgetriebe 21 gehört auch ein Hohlrad 69, das auf dem rohrförmigen Körper 58 des Abtriebsrings 55 drehbar gelagert ist und an seinem Außendurchmesser eine klinkenfreie Laufkupplung 23 trägt. Die Klinken 65 der Klinkenfreilaufkupplung 23 stehen mit der Nabenhülse 9 in Verbindung, wodurch in einer Drehrichtung Leerlauf und in der anderen Richtung, hier der Antriebsrichtung, eine formschlüssige Mitnahme über eine Klinkenverzahnung 67 am Innenumfang der Nabenhülse 9 erfolgt.

In der bereits erwähnten, von den Kugelträgerscheiben 25 und 27 gebildeten Baueinheit ist eine Anzahl von Kugeln 35 längs eines zur Achse 4 zentrischen und in einer Radialebene liegenden Kreises angeordnet (s. Fig. 2). Die über den Kugelumfang vorstehenden achszapfenförmigen Enden der Kugelachsen 37 sind über die Kugellager 41 in den Nuten 43 und 45 der Kugelträgerscheiben 25 und 27 derart fixiert, daß sie sich nur in einer durch die Nutlängsrichtung definierten und die Achse 4 enthaltenden Radialebene bewegen können. Die Anzahl der Kugeln liegt bei mindestens drei und optimal zwischen vier und sechs Stück, wobei es ebenso viele radiale Nuten 43 und 45 in den Kugelträgerscheiben 25 und 27 gibt. Die Nuten 43 und 45 führen mit ihren Nutflanken 43a und 45a die Kugellager 41, die auf den Enden der Achszapfen der Kugelachsen 37 angebracht sind. Aus Gründen eines geringen Totgangs beim Schalten von einer Drehrichtung auf die andere haben die Nuten 43 und 45 eine Breite, die dem Durchmesser der Kugellager 41 zuzüglich eines geringen Bewegungsspiels entspricht. Durch die Anordnung der gegenüberliegenden radialen Nuten 43 unf 45 im starr verschraubten Teileverband 25 und 27 bewegen sich beide Kugellager 41 und somit auch die Achszapfen in Ebenen, die sich alle in der Mitte der Nabenachse (Achse 4) schneiden. Die Verschwenkung dieser Achszapfen erzeugt in bekannter Weise durch die Änderung der Abstände der Berührungspunkte der am Reibradgetriebe beteiligten Teile 33,51 und 55 zu der Mitte der Achszapfen 37 eine Veränderung des Drehzahlunterschieds zwischen Antriebsring 51 und Abtriebsring 55, der lediglich bei paralleler koaxialer Lage der Achszapfen 37 relativ zur Achse 4 der Nabe zu Null wird. In Fig. 1 ist jeweils mit strichlierter Linie der bei der dargestellten Neigung der Kugelachse 37 ziemlich kleine Berührkreis B1 zwischen dem Antriebsring 53 und der Kugel 35 sowie der relativ große Berührkreis B2 zwischen dem Abtriebsring 55 und der Kugel 35 angedeutet. Das Übersetzungsverhältnis des Kugelreibgetriebes 17 entspricht dem Durchmesserverhältnis der Berührkreise B1 und B2.

Die Verschwenkung der Kugelachsen 37 erfolgt über eine Steuereinrichtung 79, die vom Fahrzeugbenutzer, zum Beispiel über Seilzüge und hier nicht dargestellte Handhebel, verstellbar ist. Hier wird ein Steuerrad 71 verdreht, das diese Drehsteuerbewegung über eine Steuerachse 73 an ein Zahnrad 75 weitergibt, das mit einer Hohlradverzahnung 93 eines Kulissenrades 91 zusammenwirkt und dieses in beide Drehrichtungen untersetzt verstellen kann. Hierbei ist es unerheblich, ob der Benutzer das Steuerrad 71 in beide Drehrichtungen aktiv bewegt, oder aber nur in einer Richtung und die Rückstellung einer im Seilzug angebrachten Rückstellfeder überläßt.

Wie die Fig. 1 und 3 zeigen, ist das Kulissenrad 91 drehbar auf einem Absatz 25a der nabenachsfesten steuerseitigen Kugelträgerscheibe 25 gelagert. Es weist auf der kettenzahnradseitigen Fläche mehrere in Spiralenform angebrachte Führungsrillen 95 auf, in die Kugelfortsätze 39 eingreifen, die einteilig mit dem jeweiligen Achszapfen der Kugelachsen 37 verbunden sind. Die Führungsrillen 95 haben eine Breite c, die nur geringfügig größer ist als der Durchmesser der Kugelfortsätze 39, um den entstehenden Totgang zwischen den beiden Schaltrichtungen gering zu halten.

Wird also die Steuereinrichtung 79 zum Beispiel derart betätigt, daß sich Zahnrad 75 und damit das Kulissenrad 91 im Uhrzeigersinn in Fig. 3 drehen, so werden die Kugelfortsätze radial nach außen verschoben und die Kugelachsen 37 in Fig. 1 im Uhrzeigersinn um den Kugelmittelpunkt M verschwenkt. Hierdurch wird das Übersetzungsverhältnis im Kugelreibgetriebe 17 in Richtung Schnellgang verändert. Von der einen Extremlage der Kugelachsen 37 zur anderen verändert sich das Übersetzungsverhältnis in dem Kugelreibgetriebe 17 in der vorgeschlagenen Bauart in der Weise, daß bei eingelegtem Schnellgang der Abtriebsring 55 ca. achtmal schneller dreht als bei eingelegtem Berggang (s. Fig. 1) bei jeweils derselben Drehzahl des Antriebsrings 51. Ein solcher Übersetzungsbereich ist für Fahrradgetriebenaben in vielen Fällen zu hoch und erfordert in den extremen Übersetzungspositionen zu hohe Axialkräfte. Dieser Übersetzungsbereich wird daher durch das Planetenradgetriebe und dessen Übersetzung ins Langsame von innen nach außen um den Faktor dieses Übersetzungsverhältnisses verringert.

Der Vorteil der Kombination des vorgelegten Planetenradgetriebes 21 mit dem Kugelreibgetriebe 17 liegt darin, daß die Verluste des Planetenradgetreibes 21 wegen seiner geringen relativen Drehzahlen gering sind und daß etwa in der Mitte des Übersetzungsbereichs (s. Fig. 2 und 3) die Drehzahlen von Abtriebsring 27 und Nabenhülse 9 gleich sind, nämlich dann, wenn die Kugelachsen 37 und die Nabenachse 4 parallel zueinander liegen. In diesem Falle finden überhaupt keine Zahnradbewegungen statt. Diese Getriebeposition ist es auch, die den Drehrichtungsumkehrpunkt für das Planetenradgetriebe 21 markiert. Durch das Übersetzungsverhältnis des Planetenradgetriebes 21 ist der bei Fahrrädern übliche Übersetzungsbereich von ca. 2,5 leicht erreichbar.

Wichtige Gesichtspunkte der Erfindung werden im folgenden wiedergegeben:
Die Antriebsnabe für ein Fahrzeug, insbesondere für ein Fahrrad, umfaßt eine Nabenachse 1, eine relativ dazu drehbare Nabenhülse 9 und einen auf der Nabenachse 1 gelagerten Antreiber 13. Der Antreiber 13 treibt die Nabenhülse 9 über ein Kugelreibgetriebe 17, dessen Kugelträgerscheiben 25 und 27 mit der Nabenachse 1 ein starres Getriebegehäuse bilden, dessen Kugeln 35 mit einem Führungsring 33, einem Antriebsring 51 und einem Abtriebsring 55 eine Reibverbindung eingehen, die durch Verschwenken der Achszapfen 37 zwischen Antriebsring 51 und Abtriebsring 55 verschiedene Drehzahlen ermöglicht.

Die Anpreßkräfte werden von einem Gewinde 47 zwischen Antreiber 13 und Antriebshülse 49 proportional zum Antriebsdrehmoment erzeugt, wobei die Druckfeder 57 ein totgangfreies Ansprechen des Kugelreibgetriebes 17 garantiert. Das stufenlos einstellbare Übersetzungsverhältnis des Kugelreibgetriebes 17 wird über eine Steuereinrichtung 79, bestehend aus Drehelementen, durch einen Festkonus 29 hindurch gesteuert, welche ein Kulissenrad 91 in Drehung versetzt, wodurch die spiralenförmigen Führungsrillen 95 die Kugelfortsätze 39 der Kugelachsen 37 radial nach außen oder innen, je nach Drehrichtung, bewegen. Die so verschwenkten Kugelachsen sorgen für ein stufenlos verstellbares Übersetzungsverhältnis zwischen An- und Abtriebsring.

## Patentansprüche

1. Antriebsnabe für ein Fahrzeug, insbesondere Fahrrad, umfassend:
- eine Nabenachse (1), die eine Achse (4) der Nabe festlegt,
- eine die Nabenachse (1) gleichachsig und relativ dazu drehbar umschließende Nabenhülse (9),
- einen relativ zur Nabenhülse (9) und zur Nabenachse (1) drehbar gelagerten Antreiber (13),
- ein innerhalb der Nabenhülse (9) angeordnetes Reibradgetriebe im Kraftweg zwischen Antreiber (13) und Nabenhülse (9)
- wenigstens eine bei vom Antreiber (13) her erfolgendem Antrieb der Nabe den Kraftweg zwischen Antreiber (13) und Nabenhülse (9) schließende, bei nicht antreibendem Antreiber den Kraftweg öffnende Kupplungseinrichtung (23),
- ein Planetenradgetriebe (21) im Kraftweg zwischen Antreiber (13) und Nabenhülse (9),
- eine von außen betätigbare Steuereinrichtung (79) zur stufenlosen Einstellung des Übersetzungsverhältnisses des Reibradgetriebes (17),
**dadurch gekennzeichnet,**
daß das Reibradgetriebe als Kugelreibradgetriebe (17) ausgebildet ist, umfassend
- zwei sich axial gegenüberliegende Ringe, einen Antriebsring (51) und einen Abtriebsring (55),
- mehrere in Umfangsrichtung der Ringe (51,55) verteilte, die Ringe reibschlüssig miteinander verbindende Reibkugeln (35), die mittels Kugelachsen (37) drehbar gelagert sind, und
- einen mit der Nabenachse (1) drehfest verbundenen Reibkugelträger, an dem die Reibkugeln (35) mit ihren Kugelachsen (37) jeweils in einer die Achse (4) der Nabe enthaltenden Ebene schwenkbar gelagert sind,
daß ein Planetenradträger des Planetenradgetriebes (21) mit dem Antreiber (13) verkoppelt ist, daß die Planetenräder (61) einerseits mit einem mit dem Abtriebsring (55) verkoppelten Sonnenrad (59) und andererseits mit einem mit der Nabenhülse (9) verkoppelten Hohlrad (69) kämmen, und daß die Steinereinrichtung (50) zum gemeinsamen Verschwenken der Kugelachsen (37) ausgebildet ist.

2. Antriebsnabe nach Anspruch 1,
**dadurch gekennzeichnet,** daß der Antreiber (13) mit Bolzen (63) zur drehbaren Lagerung der Planetenräder (61) versehen ist.

3. Antriebsnabe nach Anspruch 1 oder 2,
**dadurch gekennzeichnet**, daß die Kupplungseinrichtung als Klinkenfreilaufkupplung (23) ausgebildet ist und zwischen dem Hohlrad (69) und der Nabenhülse (9) angeordnet ist.

4. Antriebsnabe nach Anspruch 3,
**dadurch gekennzeichnet,** daß die Klinkenverzahnung (67) der Klinkenfreilaufkupplung (23) am Innenumfang der Nabenhülse (9) vorgesehen ist.

5. Antriebsnabe nach einem der vorhergehenden Ansprüche,
**dadurch gekennzeichnet,** daß zur axialen Verspannung des Kugelreibradgetriebes (17) mit Erhöhung der Andruckkraft zwischen den Reibkugeln (35) und dem Abtriebs- und Antriebsring (51,55) mit zunehmendem Antriebsdrehmoment eine Gewindeverbindung im Kraftweg zwischen Antreiber (13) und Kugelreibradgetriebe (17) angeordnet ist.

6. Antriebsnabe nach Anspruch 5,
**dadurch gekennzeichnet,** daß der Antriebsring (51) mit dem Antreiber (13) über eine Antriebshülse (49) zur Drehmomentübertragung verbunden ist, wobei die Antriebshülse mit einem (49) der beiden Teile Antreiber (13) und Antriebsring (49) drehfest verbunden und mit dem anderen (13) der beiden Teile über ein rechtsgängiges Gewinde (47) verkoppelt ist.

7. Antriebsnabe nach Anspruch 6,
**dadurch gekennzeichnet,** daß das Gewinde (47) ein Flachgewinde mit im wesentlichen rechteckigem Zahnprofil ist.

8. Antriebsnabe nach einem der Ansprüche 6 oder 7,
**dadurch gekennzeichnet,** daß die Antriebshülse (49) mit der Nabenachse (1) eine Lagerstelle bildet und diese auf ihrer gesamten Länge umschließt.

9. Antriebsnabe nach einem der Ansprüche 3 bis 8,
**dadurch gekennzeichnet,** daß der Abtriebsring (55) mit der Nabenhülse (9) im Kraftfluß über das Sonnenrad (49), die Planetenräder (61), das Hohlrad (69) sowie über die Klinkenfreilaufkupplung (23) verbunden ist.

10. Antriebsnabe nach Anspruch 9,
**dadurch gekennzeichnet,** daß der Abtriebsring (55) und das Sonnenrad (49) einteilig miteinander verbunden sind und einen rohrförmigen Körper (58) bilden, der auf der Antriebshülse (49) drehbar gelagert ist.

11. Antriebsnabe nach einem der vorhergehenden Ansprüche,
**dadurch gekennzeichnet,** daß der Reibkugelträger eine erste Kugelträgerscheibe (25) aufweist, die mit der Nabenachse (1) drehfest verbunden ist und eine Mehrzahl radialer Nuten zur Aufnahme von über die Reibkugeln (35) vorstehenden Enden der Kugelachsen (37) aufweist.

12. Antriebsnabe nach Anspruch 11,
**dadurch gekennzeichnet,** daß der Reibkugelträger eine zweite Kugelträgerscheibe (27) aufweist, die mit der ersten Kugelträgerscheibe (25) axial drehfest verbunden ist und die mit einer Mehrzahl von Nuten (45) versehen ist, die den Nuten (43) der ersten Kugelträgerscheibe (25) gegenüberliegen.

13. Antriebsnabe nach Anspruch 11 oder 12,
**dadurch gekennzeichnet,** daß die Enden der Kugelachsen (37) mit Kugellagern (41) versehen sind, die in die jeweilige radiale Nut (43,45) mit Bewegungsspiel eingreifen zur Bewegung des jeweiligen Endes in radialer Richtung.

14. Antriebsnabe nach einem der vorhergehenden Ansprüche,
**dadurch gekennzeichnet,** daß mindestens eines der beiden Enden der Kugelachsen (37) mit einem Verbindungsteil versehen ist, an welches die Steuereinrichtung (79) zum Verschwenken der Kugelachsen (37) angreift.

15. Antriebsnabe nach Anspruch 14,
**dadurch gekennzeichnet,** daß die Steuereinrichtung (79) ein Kulissenrad (91) umfaßt mit Führungsrillen (95), in welche die als Kugelfortsätze (39) ausgebildeten Verbindungsteile der Kugelachsen (37) eingreifen.

16. Antriebsnabe nach Anspruch 15,
**dadurch gekennzeichnet,** daß die Führungsrillen (95) spiralenförmig ausgebildet sind und die Kugelfortsätze (39) mit geringem Bewegungsspiel führen.

17. Antriebsnabe nach Anspruch 15 oder 16,
**dadurch gekennzeichnet,** daß das Kulissenrad (91) an seiner den Führungsrillen (95) gegenüberliegenden Seite mit einer Hohlradverzahnung (93) ausgebildet ist, in die ein Steuerzahnrad (57) eingreift.

18. Antriebsnabe nach einem der vorhergehenden Ansprüche,
**dadurch gekennzeichnet,** daß sämtliche Reibkugeln (35) am Innenumfang eines in der Nabenhülse (9) frei drehbar gelagerten Führungsrings (33) abrollen.

19. Antriebsnabe nach einem der vorhergehenden Ansprüche,
**gekennzeichnet durch** ein Vorspannfederelement zur axialen Vorspannung von Antriebsring (51) und Abtriebsring (55) in Richtung aufeinander zu.

20. Antriebsnabe nach Anspruch 19,
**dadurch gekennzeichnet,** daß das Vorspannfederelement als Druckfeder (57) ausgebildet ist, welches sich einerseits an einer den Antriebsring (51) mit dem Antreiber (13) verbindenden Antriebshülse (49) und andererseits an einem den Abtriebsring (55) tragenden und die Antriebshülse (49) umgreifenden, ringförmigen Körper (58) abstützt.

21. Antriebsnabe nach Anspruch 20,
**dadurch gekennzeichnet,** daß die Druckfeder (57) sich andererseits an einem zwischen dem ringförmigen Körper (58) und dem Antreiber (13) angeordneten Axiallager (19) abstützt.

22. Antriebsnabe nach einem der vorhergehenden Ansprüche,
**dadurch gekennzeichnet,** daß die vom Antreiber (13) ausgehenden inneren axialen Kräfte von der Antriebshülse (49), dem Antriebsring (51), den Reibkugeln (35), einem die Reibkugeln (35) umgreifenden Führungsring (33), dem Abtriebsring (55) und einem zwischen Abtriebsring (55) und Antreiber (13) angeordneten Axiallager (19) aufgenommen werden.

## Claims

1. A drive hub for a vehicle, particularly a bicycle, comprising:
- a hub axle (1) which determines an axis (4) of the hub,
- a hub shell (9) which equiaxially encloses and is rotatable in relation to the hub axle (1),
- a driver (13) mounted to rotate relative to the hub shell (9) and the hub axle (1),
- a friction gear disposed inside the hub shell (9) in the power path between driver (13) and hub shell (9),
- at least one coupling device (23) closing the power path between driver (13) and hub shell (9) when the hub is being driven by the driver (13) and opening the power path when the driver is not driving,
- a planetary gear (21) in the power path between driver (13) and hub shell (9),
- a control device (79) adapted to be externally actuated for infinitely variable adjustment of the transmission ratio of the friction gear (17),
characterised in that
the friction gear is constructed as a ball friction gear (17), comprising
- two axially oppositely disposed rings, a driver ring (51) and a driven ring (55),
- distributed in the peripheral direction of the rings (51, 55) and connecting the rings to one another frictionally, a plurality of friction balls (35) rotatably mounted by means of ball axles (37) and
- a friction ball carrier rotationally rigidly connected to the hub axle (1) and on which the ball axles (37) of the friction balls (35) are mounted to pivot in a plane containing the axis (4) of the hub,
and in that a planet gear carrier of the planetary gear (21) is coupled with the driver (13) and in that the planet wheels (61) on the one hand engage a sun wheel (59) coupled with the driven ring (55) and on the other a ring gear (69) coupled with the hub shell (9) and in that the control device (50) is constructed for joint pivoting of the ball axles (37).

2. A drive hub according to Claim 1, characterised in that the driver (13) is provided with pins (63) for rotatable mounting of the planet wheels (61).

3. A drive hub according to Claim 1 or 2, characterised in that the coupling device is constructed as a pawl freewheel coupling (23) and is disposed between the ring gear (69) and the hub shell (9).

4. A drive hub according to Claim 3, characterised in that the pawl teeth (67) of the pawl freewheel coupling (23) are provided on the inner circumference of the hub shell (9).

5. A drive hub according to one of the preceding Claims, characterised in that for axial tensioning of the ball friction gear (17) with an increase in the pressure force between the friction balls (35) and the driven and driver rings (51, 55) with increasing driving torque, there is a screw-threaded connection in the power path between driver (13) and ball friction gear (17).

6. A drive hub according to Claim 5, characterised in that the drive ring (51) is connected to the driver (13) via a drive sleeve (49) for torque transmission, the drive sleeve being rotationally rigidly connected to one (49) of the two parts - driver (13) and drive ring (49) - and coupled to the other (13) of the two parts via a right-hand screw thread (47).

7. A drive hub according to Claim 6, characterised in that the screw thread (47) is a flat thread with a substantially rectangular tooth profile.

8. A drive hub according to one of Claims 6 or 7, characterised in that the drive sleeve (49) forms a bearing with the hub axle (1), enclosing the entire length of this latter.

9. A drive hub according to one of Claims 3 to 8, characterised in that the driven ring (55) is connected to the hub shell (9) in the power path via the sun wheel (49), the planet wheels (61), the ring gear (69) and via the pawl freewheel coupling (23).

10. A drive hub according to Claim 9, characterised in that the driven ring (55) and the sun wheel (49) are connected to each other in one piece and form a tubular body (58) which is rotatably mounted on the drive sleeve (49).

11. A drive hub according to one of the preceding Claims, characterised in that the friction ball carrier comprises a first ball carrier plate (25) which is rotationally rigidly connected to the hub axle (1) and a plurality of radial grooves to accommodate ends of the ball axles (37) which project beyond the friction balls (35).

12. A drive hub according to Claim 11, characterised in that the friction ball carrier comprises a second ball carrier plate (27) which is axially rotationally rigidly connected to the first ball carrier plate (25) and which is provided with a plurality of grooves (45) disposed opposite the grooves (43) in the first ball carrier plate (25).

13. A drive hub according to Claim 11 or 12, characterised in that the ends of the ball axles (37) are provided with ball-bearings (41) which engage the respective radial groove (43, 45) with clearance for movement of the respective end in a radial direction.

14. A drive hub according to one of the preceding Claims, characterised in that at least one of the two ends of the ball axles (37) is provided with a connecting part which the control device (79) engages for pivoting of the ball axles (37).

15. A drive hub according to Claim 14, characterised in that the control device (79) comprises a crank slider wheel (91) with guide grooves (95) engaged by the ball axles (37) through their connecting parts which are constructed as spherical projections (39).

16. A drive hub according to claim 15, characterised in that the guide grooves (95) are of spiral design and guide the spherical projections (39) with slight play.

17. A drive hub according to Claim 15 or 16, characterised in that the crank slider wheel (91) is on its side opposite the guide grooves (95) constructed with ring gear teeth (93) engaged by a control pinion (57).

18. A drive hub according to one of the preceding Claims, characterised in that all friction balls (35) roll on the inner periphery of a common guide ring (33) mounted to rotate freely in the hub shell (9).

19. A drive hub according to one of the preceding Claims, characterised by a pre-tensioning spring element for axially pre-tensioning drive ring (51) and driven ring (55) towards each other.

20. A drive hub according to Claim 19, characterised in that the pre-tensioning spring element is constructed as a thrust spring (57) biased at one and on a drive sleeve (49) connecting the drive ring (51) to the driver (13) and at the other on an annular body (58) which carries the driven ring (55) and engages around the drive sleeve (49).

21. A drive hub according to Claim 20, characterised in that the thrust spring (57) is biased at the other end on an axial bearing (19) disposed between the annular body (58) and the driver (13).

22. A drive hub according to one of the preceding Claims, characterised in that the internal axial forces emanating from the driver (13) are absorbed by the drive sleeve (49), the drive ring (51), the friction balls (35), a guide ring (33) engaging around the friction balls (35), the drive ring (55) and an axial bearing (19) disposed between the driven ring (55) and the driver (13).

## Revendications

1. Moyeu d'entraînement pour un véhicule, en particulier une bicyclette, comprenant :
- un axe de moyeu (1, 2), déterminant un axe (4) du moyeu,
- une douille de moyeu (9), coaxiale à l'axe de moyeu (1) et l'entourant en pouvant tourner autour de lui,
- un élément entraîneur (13), monté rotatif par rapport à la douille de moyeu (9) et à l'axe de moyeu (1, 2),
- une transmission à roue de friction, disposée à l'intérieur de la douille de moyeu (9), dans la chaîne cinématique entre élément entraîneur (13) et douille de moyeu (9),
- au moins un dispositif d'accouplement (23) qui, en cas d'entraînement du moyeu par l'élément entraîneur (13), ferme la chaîne cinématique entre élément entraîneur (13) et douille de moyeu (9), et, en cas de non entraînement par l'élément entraîneur, ouvre la chaîne cinématique,
- une transmission à engrenage épicycloïdal (21), montée dans la chaîne cinématique entre élément entraîneur (13) et douille de moyeu (9),
- un dispositif de commande (79), pouvant être commandé depuis l'extérieur, pour régler de façon continue le rapport de transmission de la transmission à roue à friction (17),
caractérisé en ce que
la transmission à roue de friction est réalisée sous forme de transmission à roue de friction sphérique (17), comprenant :
- deux bagues, placées axialement en regard l'une de l'autre, constituant une bague menante (51) et une bague menée (55),
- plusieurs billes de friction (35), réparties dans la direction périphérique des bagues (51, 55), reliant entre elles, par friction, les bagues et montées rotatives au moyen d'axes de billes (37), et
- un support de billes de friction, relié, assujetti en rotation, à l'axe de moyeu (1) et sur lequel les billes de friction (35) avec leurs axes de billes (37) tourillonnent chacune, en pouvant pivoter dans un plan contenant l'axe (4) du moyeu,
en ce qu'un porte-satellites de la transmission à engrenage épicycloïdal (21) est couplé à l'élément entraîneur (13), en ce que les satellites (61) engrènent, d'une part, avec un planétaire (59) couplé à la bague menante (55) et engrènent, d'autre part, avec une roue creuse (69) couplée à la douille de moyeu (9), et en ce que le dispositif de commande (50) est réalisé pour obtenir un pivotement commun des axes de billes (37).

2. Moyeu d'entraînement selon la revendication 1, caractérisé en ce que l'élément entraîneur (13) est pourvu d'axes (63) destinés à servir de paliers de rotation pour les satellites (61).

3. Moyeu d'entraînement selon la revendication 1 ou 2, caractérisé en ce que le dispositif d'accouplement est réalisé sous forme d'embrayage à roue libre à cliquet (23) et est disposé entre la roue creuse (69) et la douille de moyeu (9).

4. Moyeu d'entraînement selon la revendication 3, caractérisé en ce que la denture d'encliquetage (67) de l'embrayage à roue libre à cliquet (23) est prévue sur la périphérie intérieure de la douille de moyeu (9).

5. Moyeu d'entraînement selon l'une des revendications précédentes, caractérisé en ce que, pour obtenir un serrage axial de la transmission à roue de friction sphérique (17), une liaison filetée est disposée dans la chaîne cinématique, entre élément entraîneur (13) et transmission à roue de friction sphérique (17), visant à produire une augmentation de la force de pressage entre les billes de friction (35) et les bagues menée et menante (51, 55), lorsque le couple d'entraînement augmente.

6. Moyeu d'entraînement selon la revendication 5, caractérisé en ce que la bague menante (51) est reliée à l'élément entraîneur (13) par l'intermédiaire d'une douille d'entraînement (49), en vue de la transmission d'un couple, la douille d'entraînement étant reliée, assujettie en rotation, à l'une (49) des deux parties que sont l'élément entraîneur (13) et la bague menante (49), et est couplée à l'autre (13) de ces deux parties par l'intermédiaire d'un filetage (47) à pas à droite.

7. Moyeu d'entraînement selon la revendication 6, caractérisé en ce que le filetage (47) est un filetage plat à profil de dent sensiblement rectangulaire.

8. Moyeu d'entraînement selon la revendication 6 ou 7, caractérisé en ce que la douille d'entraînement (49) constitue avec l'axe de moyeu (1) un point de tourillonnement et l'entoure sur toute sa longueur.

9. Moyeu d'entraînement selon l'une des revendications 3 à 8, caractérisé en ce que la bague menée (55) est reliée à la douille de moyeu (9), suivant une chaîne cinématique passant par le planétaire (49), les satellites (61), la roue creuse (69), ainsi que l'embrayage à roue libre à cliquet (23).

10. Moyeu d'entraînement selon la revendication 9, caractérisé en ce que la bague menée (55) et le planétaire (49) sont reliés l'un à l'autre d'un seul tenant et constituent un corps tubulaire (58), monté rotatif sur la douille d'entraînement (49).

11. Moyeu d'entraînement selon l'une des revendications précédentes, caractérisé en ce que le support de billes de friction présente un premier disque support de billes (25), relié, assujetti en rotation, à l'axe de moyeu (1), et présentant une pluralité de rainures radiales destinées à recevoir des extrémités d'axes de billes (37), faisant saillie des billes de friction (35).

12. Moyeu d'entraînement selon la revendication 11, caractérisé en ce que le support de billes de friction présente un deuxième disque support de billes (27), relié, assujetti en rotation et axialement, au premier disque support de billes (25), et présentant une pluralité de rainures (45), placées en regard des rainures (43) du premier disque support de billes (25).

13. Moyeu d'entraînement selon la revendication 11 ou 12, caractérisé en ce que les extrémités des axes de billes (37) sont pourvues de roulements à billes (41), s'engageant dans la rainure radiale (43, 45) respective avec un jeu de mouvement, pour permettre le déplacement de l'extrémité respective en direction radiale.

14. Moyeu d'entraînement selon l'une des revendications précédentes, caractérisé en ce qu'au moins l'une des deux extrémités des axes de billes (37) est pourvue d'une partie de liaison sur laquelle agit le dispositif de commande (79) destiné à faire pivoter les axes de billes (37).

15. Moyeu d'entraînement selon la revendication 14, caractérisé en ce que le dispositif de commande (79) comprend une roue à coulisse (91) dotée de rainures de guidage (95), dans lesquelles s'engagent les parties de liaison, réalisées sous forme de prolongements de billes (39), des axes de billes (37).

16. Moyeu d'entraînement selon la revendication 15, caractérisé en ce que les rainures de guidage (95) sont de forme spirale et guident les prolongements de billes (39) avec un faible jeu de déplacement.

17. Moyeu d'entraînement selon la revendication 15 ou 16, caractérisé en ce que la roue à coulisse (91) est réalisée, sur sa face opposée aux rainures de guidage (95), avec une denture de roue creuse (93), dans laquelle engrène une roue dentée de commande (57).

18. Moyeu d'entraînement selon l'une des revendications précédentes, caractérisé en ce que toutes les billes de friction (35) roulent sur la périphérie intérieure d'une bague de guidage (33) montée pour permettre un tourillonnement libre dans la douille de moyeu (9).

19. Moyeu d'entraînement selon l'une des revendications précédentes, caractérisé par un élément élastique de précontrainte destiné à assurer une précontrainte axiale de rapprochement entre la bague menante (51) et la bague menée (55).

20. Moyeu d'entraînement selon la revendication 19, caractérisé en ce que l'élément élastique de précontrainte est réalisé sous forme de ressort de compression (57), prenant appui, d'une part, sur une douille d'entraînement (49) reliant la bague menante (51) à l'élément entraîneur (13), et, d'autre part, sur un corps annulaire (58), portant la bague menée (55) et entourant la douille d'entraînement (49).

21. Moyeu d'entraînement selon la revendication 20, caractérisé en ce que le ressort de pression (57) prend appui, d'autre part, sur un palier axial (19) disposé entre le corps annulaire (58) et l'élément entraîneur (13).

22. Moyeu d'entraînement selon l'une des revendications précédentes, caractérisé en ce que les efforts axiaux internes partant de l'élément entraîneur (13) sont supportés par la douille d'entraînement (49), la bague menante (51), les billes de friction (35), une bague de guidage (33) entourant les billes de friction (35), la bague menée (55) et un palier axial (19) disposé entre la bague menée (55) et l'élément entraîneur (13).
